# EUROPEAN PATENT APPLICATION

(11) **EP 4 838 690 A1**
(43) Date of publication of application: **11.11.2026**
(21) Application number: 25922830.2
(22) Date of filing: 28.11.2025
(51) Int. Cl.: H01M 50/636

(54) **PIN INSERTION MODULE, PIN INSERTION DEVICE, AND PIN INSERTION METHOD**

(30) Priority: 10.02.2025 CN 202510147446; 10.02.2025 CN 202520211203 U
(71) Applicant: Wuxi Lead Intelligent Equipment Co., Ltd., Wuxi, Jiangsu 214028 (CN)
(72) Inventor: YAO, Yichao, Wuxi, Jiangsu 214028 (CN); ZHOU, Junhong, Wuxi, Jiangsu 214028 (CN); JIANG, Zhongyi, Wuxi, Jiangsu 214028 (CN)
(74) Representative: Rau, Schneck & Hübner Patentanwälte Rechtsanwälte PartGmbB
(86) International application number: PCT/CN2025/138521
(87) International publication number: WO 2026/166155

(57) **Abstract**

Disclosed are a pin inserting module, a pin inserting device, and a pin inserting method. The pin inserting module includes: a pin suction assembly configured to draw a sealing pin via suction; a base provided, on one side thereof, with a floating seat that is elastically floatable along a first direction, the pin suction assembly being provided on the floating seat, the base being movable along the first direction so that the pin suction assembly is capable of inserting the sealing pin into a liquid injection hole of a battery; and a limiting member provided on the floating seat and configured to abut against the battery when the sealing pin is inserted into the liquid injection hole to a predetermined depth, so as to limit an insertion depth of the sealing pin. The pin inserting module of the present disclosure, by providing the limiting member and the pin suction assembly on the elastically floatable floating seat, enables the pin inserting module to insert the sealing pin to the predetermined depth when inserting pins into batteries of different heights, thereby effectively avoiding the problem of excessive or insufficient insertion of the sealing pin caused by dimensional errors of the batteries, significantly improving the yield of pin insertion, and further enhancing the production efficiency and product quality.

## Description

The present disclosure claims priority to a Chinese patent application No. 202510147446.5 filed with the CNIPA on February 10, 2025 and entitled "PIN INSERTING MODULE, PIN INSERTING DEVICE AND PIN INSERTING METHOD", and a Chinese patent application No. 202520211203.9 filed with the CNIPA on February 10, 2025 and entitled "PIN INSERTING MODULE AND PIN INSERTING DEVICE", both of which are hereby incorporated by reference in their entireties.

### TECHNICAL FIELD

The present disclosure relates to the technical field of battery production, and particularly to a pin inserting module, a pin inserting device, and a pin inserting method.

### BACKGROUND

During a battery manufacturing process, a pin inserting process is a critical step of inserting a sealing pin into a liquid injection hole of a battery to achieve sealing. However, batteries usually have dimensional errors during the manufacturing process, which cause a height of the battery to fluctuate within a certain range. Existing pin inserting devices cannot adapt to such dimensional errors, which easily causes the sealing pin to be inserted excessively or insufficiently, thereby reducing the yield of pin insertion, increasing the need for frequent adjustment or rework, and further lowering the production efficiency.

### SUMMARY

The present disclosure aims to at least to some extent alleviate or solve at least one of the above-mentioned problems.

In one aspect of the present disclosure, a pin inserting module is proposed, which comprises: a pin suction assembly configured to draw a sealing pin via suction; a base provided, on one side thereof, with a floating seat that is elastically floatable along a first direction, the pin suction assembly being provided on the floating seat, the base being movable along the first direction so that the pin suction assembly is capable of inserting the sealing pin into a liquid injection hole of a battery; and a limiting member provided on the floating seat and configured to abut against the battery when the sealing pin is inserted into the liquid injection hole to a predetermined depth, so as to limit an insertion depth of the sealing pin.

Optionally, the pin inserting module further comprises: at least one guide rod fixedly connected to one of the base and the floating seat, and movably provided along the first direction on the other of the base and the floating seat; and an elastic member provided between the base and the floating seat and sleeved on the guide rod.

Optionally, a first end of the guide rod extends through the other of the base and the floating seat, and is threadedly connected with an adjusting nut, and the adjusting nut is configured to adjust a compression amount of the elastic member.

Optionally, the pin suction assembly is fixedly connected to the floating seat.

Optionally, in the first direction, a position of the pin suction assembly relative to the limiting member is adjustable.

Optionally, the pin suction assembly is movable along the first direction, and the pin inserting module further comprises: a driving member provided on the floating seat, connected to the pin suction assembly, and configured to drive the pin suction assembly to move along the first direction.

Optionally, the limiting member is configured as a guide sleeve, is fixedly connected to the floating seat, and is sleeved on the pin suction assembly.

Optionally, the pin inserting module further comprises: a floating joint comprising a first connecting portion and a second connecting portion that are relatively movable along a second direction, the first connecting portion being connected to the driving member, and the second connecting portion being connected to the pin suction assembly.

Optionally, the floating seat comprises: a first mounting plate, wherein the driving member is provided on a side of the first mounting plate that is proximate to the base; and a second mounting plate, wherein in the first direction, the second mounting plate is located on a side of the first mounting plate that is distal to the base, the first mounting plate and the second mounting plate are connected via a connecting member; and the limiting member is provided on a side of the second mounting plate that is distal to the first mounting plate; a part of the pin suction assembly is located between the first mounting plate and the second mounting plate, and a pin suction nozzle of the pin suction assembly extends through the second mounting plate and is located on a side of the second mounting plate that is distal to the first mounting plate.

Optionally, the pin inserting module further comprises: a stopping member provided on the pin suction assembly, wherein a position of the stopping member in the first direction is adjustable, and the stopping member is configured to cooperate with the first mounting plate to limit a position of the pin suction assembly.

Optionally, the stopping member is configured as a screw, and the screw is threadedly connected with the pin suction assembly.

In another aspect of the present disclosure, a pin inserting device is proposed, which comprises the pin inserting module according to any one of the preceding embodiments.

In another aspect of the present disclosure, a pin inserting method is proposed, which uses the above pin inserting device to insert a pin into a battery, and the pin inserting method comprises: transporting the battery to a pin inserting station; using the pin suction assembly to draw a sealing pin via suction; moving the pin inserting module to the pin inserting station; and driving, based on the height of the lowest battery, the base to move along the first direction so that the limiting member abuts against the battery, and through the movement of the base, inserting the sealing pin into a liquid injection hole of the battery to a predetermined depth.

Thus, the pin inserting module proposed by the present disclosure, by providing the limiting member and the pin suction assembly on the elastically floatable floating seat, enables the pin inserting module to insert the sealing pin to the predetermined depth when inserting pins into batteries of different heights, thereby effectively avoiding the problem of excessive or insufficient insertion of the sealing pin caused by dimensional errors of the batteries, significantly improving the yield of pin insertion, and further enhancing the production efficiency and product quality.

### BRIEF DESCRIPTION OF THE DRAWINGS

The above and/or additional aspects and advantages of the present disclosure will become apparent and easily understandable from the description of the embodiments in conjunction with the following drawings, wherein:
FIG. 1 shows a structural schematic view of a pin inserting module according to an embodiment of the present disclosure from one perspective;
FIG. 2 shows a structural schematic view of a pin inserting module according to an embodiment of the present disclosure from another perspective;
FIG. 3 shows a top view of a pin inserting device according to an embodiment of the present disclosure;
FIG. 4 shows a top view of a pin inserting device according to an embodiment of the present disclosure with a first CCD apparatus and a second CCD apparatus removed;
FIG. 5 shows a front view of a pin inserting device according to an embodiment of the present disclosure with a first CCD apparatus and a second CCD apparatus removed.

### Description of reference signs:

100: pin inserting device;
10: pin suction assembly; 11: pin suction seat; 12: pin suction nozzle; 13: air joint;
20: base; 21: floating seat; 211: first mounting plate; 212: second mounting plate; 213: connecting member; 22: guide rod; 23: elastic member; 24: adjusting nut; 25: flange seat; 26: linear bearing;
30: limiting member; 40: driving member; 41: magnetic switch; 50: floating joint; 51: first connecting portion; 52: second connecting portion; 60: stopping member;
70: multi-axis robot apparatus; 71: flexible vibration plate apparatus; 72: ion air apparatus; 73: first CCD apparatus; 74: second CCD apparatus; 75: pin inserting driving unit.

### DETAILED DESCRIPTION

Various exemplary embodiments of the present disclosure will now be described in detail with reference to the accompanying drawings. It is to be noted that unless otherwise specified, the scope of the present disclosure is not limited to relative arrangements, numerical expressions and values of components and steps as illustrated in the embodiments.

The description of at least one exemplary embodiment is for illustrative purpose only, and in no way implies any restriction on the present disclosure or application or use thereof.

Techniques, methods and devices known to those skilled in the art may not be discussed in detail; however, such techniques, methods and devices shall be regarded as a part of the description where appropriate.

In all the examples illustrated and discussed herein, any specific value shall be interpreted as illustrative rather than restrictive. Thus, different values may be available for alternative examples of the exemplary embodiments.

It is to be noted that similar reference numbers and alphabetical letters represent similar items in the accompanying drawings. In the case that a certain item is identified in a drawing, further reference thereof may be omitted in the subsequent drawings.

The pin inserting module according to the embodiments of the present disclosure will be described in detail below with reference to the accompanying drawings.

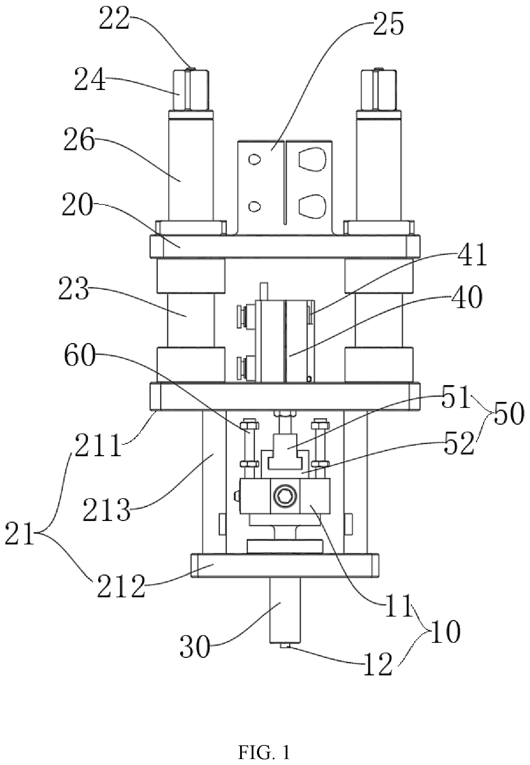

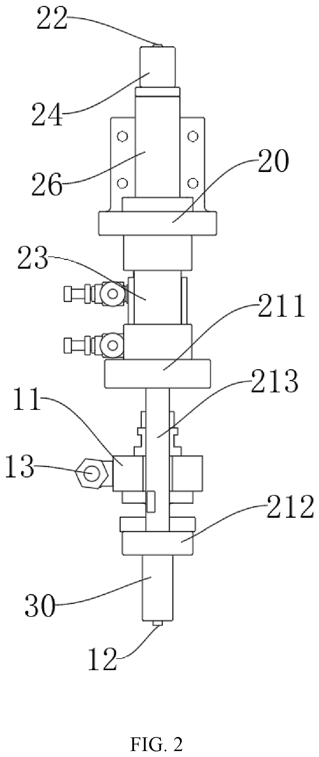

As shown in Figures 1 and 2, a pin inserting module according to an embodiment of the present disclosure comprises: a pin suction assembly 10, a base 20, and a limiting member 30.

Specifically, the pin suction assembly 10 is configured to draw a sealing pin via suction; a floating seat 21 that is elastically floatable along a first direction is provided on one side of the base 20, the pin suction assembly 10 is provided on the floating seat 21, the base 20 is movable along the first direction so that the pin suction assembly 10 can insert the sealing pin into a liquid injection hole of a battery; and the limiting member 30 is provided on the floating seat 21, and is configured to abut against the battery when the sealing pin is inserted into the liquid injection hole to a predetermined depth, so as to limit an insertion depth of the sealing pin.

In other words, as shown in Figures 1 and 2, the pin inserting module according to the embodiments of the present disclosure is mainly applied to a pin inserting device 100, and the pin inserting module mainly comprises a pin suction assembly 10 and a base 20. Wherein, the pin suction assembly 10 comprises a pin suction seat 11 and a pin suction nozzle 12. A first end (e.g., an upper end) of the pin suction nozzle 12 is fixedly connected to the pin suction seat 11, and the pin suction nozzle 12 is used for connecting to a negative pressure generating apparatus. By controlling the operation of the negative pressure generating apparatus, a second end (e.g., a lower end) of the pin suction nozzle 12 can controllably draw a sealing pin via suction.

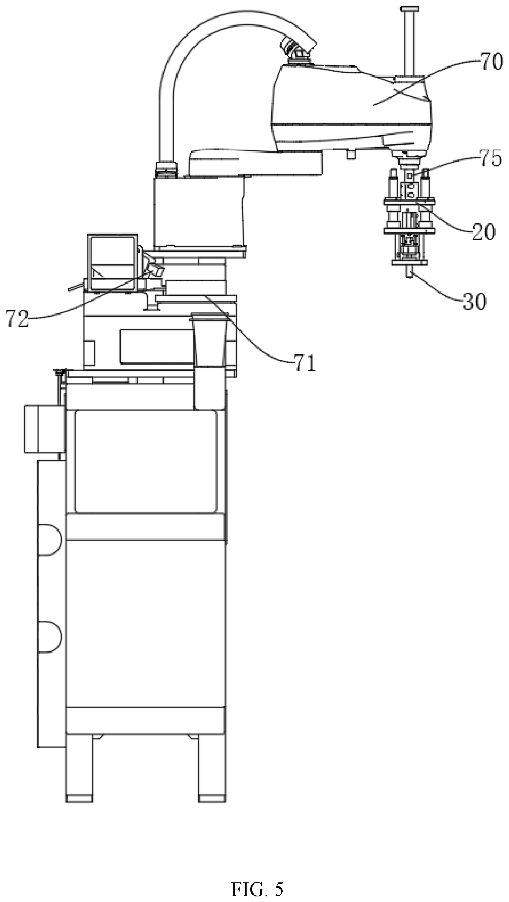

Specifically, as shown in Figure 5, the base 20 is used for connecting to a pin inserting driving unit 75 (e.g., a cylinder). The pin inserting driving unit 75 can drive the base 20 to move along the first direction. The first direction is the same as the length direction of the sealing pin on the pin suction assembly 10 (i.e., the depth direction of the liquid injection hole). When the length direction of the sealing pin on the pin suction assembly 10 is a vertical direction, the first direction is the vertical direction. As shown in Figure 1, a floating seat 21 that is elastically floatable along the first direction is provided on one side of the base 20, and the pin suction assembly 10 is mounted on the floating seat 21. During pin insertion, the pin inserting driving unit 75 drives the base 20 to move along the first direction, so that the pin suction assembly 10 moves along the first direction, thereby inserting the sealing pin drawn by the pin suction nozzle 12 via suction into the liquid injection hole of the battery.

Further, as shown in Figures 1 and 2, the limiting member 30 is fixedly connected to a side of the floating seat 21 that is proximate to the second end of the pin suction nozzle 12. When the sealing pin is not inserted into the liquid injection hole, the limiting member 30 is spaced apart from the top of the battery; and when the sealing pin is inserted into the liquid injection hole to the predetermined depth, the limiting member 30 abuts against the top of the battery.

During the pin inserting process, the pin inserting driving unit 75 drives the base 20 to move toward the battery. When the limiting member 30 abuts against the top of the battery, the depth to which the sealing pin is inserted into the liquid injection hole is the predetermined depth. If the base 20 continues to move toward the battery, the limiting member 30 will restrict the floating seat 21 from continuing to move toward the battery. Since the floating seat 21 is elastically floatable, during the movement of the base 20, the distance between the base 20 and the floating seat 21 decreases, while the pin suction assembly 10 on the floating seat 21 remains stationary relative to the battery.

Thus, after the limiting member 30 abuts against the top of the battery, it is possible to prevent the pin suction assembly 10 from continuing to move toward the battery, thereby ensuring that the depth to which the sealing pin is inserted into the liquid injection hole remains at the predetermined depth without further insertion.

That is to say, during the pin inserting process, the pin inserting module according to the embodiments of the present disclosure only needs to be controlled based on the height dimension of the lowest battery, so as to ensure that the limiting member 30 always remains in abutment with the top of the battery, thereby effectively avoiding insufficient or excessive insertion depth of the sealing pin, and further effectively improving the yield of pin insertion.

Thus, the pin inserting module provided according to the present embodiment, by providing the limiting member 30 and the pin suction assembly 10 on the elastically floatable floating seat 21, enables the pin inserting module to insert the sealing pin to the predetermined depth when inserting pins into batteries of different heights, thereby effectively avoiding the problem of excessive or insufficient insertion of the sealing pin caused by dimensional errors of the batteries, significantly improving the yield of pin insertion, and further enhancing the production efficiency and product quality.

According to an embodiment of the present disclosure, the pin inserting module further comprises: at least one guide rod 22, wherein the guide rod 22 is fixedly connected to one of the base 20 and the floating seat 21, and the guide rod 22 is movably provided along the first direction on the other of the base 20 and the floating seat 21; and an elastic member 23, wherein the elastic member 23 is provided between the base 20 and the floating seat 21, and is sleeved on the guide rod 22.

Specifically, as shown in Figures 1 and 2, the base 20 has a first side and a second side opposite to each other in the first direction. A flange seat 25 for connecting to an output end of the pin inserting driving unit 75 is fixedly connected to the first side of the base 20. The floating seat 21 is located on the second side of the base 20 and is spaced apart from the base 20. The base 20 and the floating seat 21 are movably connected together by one or more guide rods 22, so that the floating seat 21 is movable relative to the base 20 along the first direction. In the present embodiment, the base 20 and the floating seat 21 are movably connected together by two guide rods 22, thereby ensuring structural stability.

Specifically, the connection manner between the base 20 and the floating seat 21 includes but is not limited to the following cases:
Case 1: the guide rod 22 extends along the first direction, one end of the guide rod 22 is fixedly connected to the floating seat 21, and the guide rod 22 is movably installed on the base 20 along the first direction;
Case 2: the guide rod 22 extends along the first direction, one end of the guide rod 22 is fixedly connected to the base 20, and the guide rod 22 is movably installed on the floating seat 21 along the first direction.

In the present embodiment, the elastic member 23 is provided between the base 20 and the floating seat 21. The elastic member 23 may be a spring. One end of the spring abuts against or is fixedly connected to the floating seat 21, and the other end of the spring abuts against or is fixedly connected to the base 20, thereby enabling the floating seat 21 to be elastically floatable along the first direction, with a simple structure. The number of elastic members 23 may be the same as the number of guide rods 22, and the elastic members 23 may be sleeved on the corresponding guide rods 22, so that the guide rods 22 can effectively guide the contraction of the elastic members 23, avoiding the deflection or instability that the elastic members 23 may experience when subjected to force, thereby ensuring the reliability of the pin inserting module.

In some implementations of the present disclosure, a first end of the guide rod 22 extends through the other of the base 20 and the floating seat 21, the first end of the guide rod 22 is threadedly connected with an adjusting nut 24, and the adjusting nut 24 is configured to adjust a compression amount of the elastic member 23.

Specifically, as shown in Figures 1 and 2, the base 20 is provided with a connecting hole penetrating therethrough in the first direction. The connecting hole corresponds to the number and position of the guide rods 22. The first end of the guide rod 22 extends through the connecting hole, and is threadedly connected with the adjusting nut 24. By rotating the adjusting nut 24, it is possible to adjust the position of the adjusting nut 24 in the first direction, so as to change the maximum distance between the base 20 and the floating seat 21, thereby changing the compression amount of the elastic member 23. Therefore, it is possible to flexibly adjust the pin insertion force range only by rotating the adjusting nut 24, effectively improving the applicability of the pin inserting module.

In some optional examples of the present disclosure, a linear bearing 26 is fixedly connected to one side of the base 20 that is distal to the floating seat 21 at a position corresponding to the connecting hole. The first end of the guide rod 22 extends through the linear bearing 26 and is threadedly connected with the adjusting nut 24. When the pin inserting module is not performing pin insertion, the adjusting nut 24 abuts against the linear bearing 26. It should be noted that when the linear bearing 26 is not provided, in the case where the pin inserting module is not performing pin insertion, the adjusting nut 24 abuts against the base 20, which will not be repeated in this example.

According to an embodiment of the present disclosure, the pin suction assembly 10 is fixedly connected to the floating seat 21.

In the present embodiment, the fixed connection manner enables the pin suction assembly 10 and the floating seat 21 to always maintain a precise relative positional relationship therebetween, which can ensure the yield of pin insertion.

In some optional examples of the present disclosure, in the first direction, a position of the pin suction assembly 10 relative to the limiting member 30 is adjustable.

That is to say, in the first direction, a position of the pin suction assembly 10 relative to the limiting member 30 is adjustable. For example, the position of the pin suction assembly 10 on the floating seat 21 in the first direction is adjustable, or the position of the pin suction assembly 10 on the floating seat 21 in the first direction is adjustable, so that the pin inserting module is switchable between a first state and a second state.

The first state may be a pin suction state. In this state, the pin suction nozzle 12 of the pin suction assembly 10 protrudes from the limiting member 30. When drawing a sealing pin via suction, the limiting member 30 can avoid the sealing pin, which is conducive to the pin suction assembly 10 drawing the sealing pin in a region via suction where the sealing pins are densely arranged.

The second state may be a pin inserting state. In this state, the pin suction nozzle 12 of the pin suction assembly 10 is flush with or retracted within the limiting member 30. In this case, it is possible to insert the sealing pin into the liquid injection hole to the predetermined depth only by the limiting member 30 abutting against the top of the battery.

In addition, in this example, by adjusting the relative position of the pin suction assembly 10 and the limiting member 30 in the first direction, it is possible to adapt the pin inserting module to different types of batteries and sealing pins, effectively improving the applicability of the pin inserting module.

In some implementations of the present disclosure, the pin suction assembly 10 is movable along the first direction, and the pin inserting module further comprises: a driving member 40, wherein the driving member 40 is provided on the floating seat 21, is connected to the pin suction assembly 10, and is configured to drive the pin suction assembly 10 to move along the first direction.

Specifically, as shown in Figure 1, the floating seat 21 is fixedly connected with the driving member 40. The driving member 40 may be a cylinder. An output end of the driving member 40 is movable along the first direction. The pin suction assembly 10 is connected to the output end of the driving member 40. The output end of the driving member 40 is switchable between a pin suction position and a pin inserting position. The driving member 40 can drive the pin suction assembly 10 to move along the first direction, so that the pin inserting module is switchable between the first state (i.e., the output end of the driving member 40 is in the pin suction position) and the second state (i.e., the output end of the driving member 40 is in the pin inserting position). Moreover, by adjusting the position of the pin suction assembly 10 in the first direction, the pin inserting module can be adapted to different types of batteries and sealing pins, with a simple structure and easy production and assembly.

As shown in Figure 1, in some optional examples of the present disclosure, a magnetic switch 41 is provided on one side of the driving member 40. The magnetic switch 41 can detect the pin suction position and the pin inserting position of the driving member 40.

According to an embodiment of the present disclosure, the limiting member 30 is configured as a guide sleeve. The limiting member 30 is fixedly connected to the floating seat 21, and is sleeved on the pin suction assembly 10.

That is to say, as shown in Figure 1, the limiting member 30 is configured as a sleeve structure extending along the first direction, so that it can be used as a guide sleeve. In the present embodiment, the limiting member 30 is fixedly connected to the floating seat 21, and is sleeved on the pin suction assembly 10, so that the limiting member 30 can guide the pin suction assembly 10, thereby ensuring the stability of the movement of the pin suction assembly 10, and further improving the yield of pin insertion.

In some implementations of the present disclosure, the pin inserting module further comprises: a floating joint 50, wherein the floating joint 50 comprises a first connecting portion 51 and a second connecting portion 52 that are relatively movable along a second direction, the first connecting portion 51 is connected to the driving member 40, and the second connecting portion 52 is connected to the pin suction assembly 10.

In other words, as shown in Figure 1, the driving member 40 and the pin suction assembly 10 can be connected together via the floating joint 50. Specifically, the floating joint 50 includes a first connecting portion 51 and a second connecting portion 52. Wherein, the first connecting portion 51 is fixedly connected to the driving member 40, and is movably provided on the second connecting portion 52 along the second direction. The second direction is perpendicular to the first direction (e.g., may be a radial direction of the limiting member 30). The second connecting portion 52 is fixedly connected to the pin suction seat 11 of the pin suction assembly 10.

In this implementation, the floating joint 50 can compensate, to a certain extent, for installation errors or minor displacements during operation, ensuring that the pin suction assembly 10 remains stable during operation.

According to an embodiment of the present disclosure, the floating seat 21 comprises: a first mounting plate 211, wherein the driving member 40 is provided on a side of the first mounting plate 211 that is proximate to the base 20; and a second mounting plate 212, wherein in the first direction, the second mounting plate 212 is located on a side of the first mounting plate 211 that is distal to the base 20, the first mounting plate 211 and the second mounting plate 212 are connected via a connecting member 213, the limiting member 30 is provided on a side of the second mounting plate 212 that is distal to the first mounting plate 211, a part of the pin suction assembly 10 is located between the first mounting plate 211 and the second mounting plate 212, and a pin suction nozzle 12 of the pin suction assembly 10 extends through the second mounting plate 212 and is located on a side of the second mounting plate 212 that is distal to the first mounting plate 211.

Specifically, as shown in Figure 1, the floating seat 21 mainly comprises a first mounting plate 211 and a second mounting plate 212. Wherein, the first mounting plate 211 and the second mounting plate 212 are spaced apart from each other in the first direction. Two connecting members 213 are provided between the first mounting plate 211 and the second mounting plate 212. The connecting members 213 are configured as connecting columns extending along the first direction. A first end of each connecting member 213 is fixedly connected to the first mounting plate 211, and a second end of each connecting member 213 is fixedly connected to the second mounting plate 212. The first mounting plate 211 is located on a side of the second mounting plate 212 that is proximate to the base 20. The first mounting plate 211 is fixedly connected to the guide rods 22. The driving member 40 is fixedly connected to a side of the first mounting plate 211 that is proximate to the base 20, so that the space between the first mounting plate 211 and the base 20 can be fully utilized.

As shown in Figure 1, the pin suction seat 11 of the pin suction assembly 10 is located between the first mounting plate 211 and the second mounting plate 212, so that the space between the first mounting plate 211 and the second mounting plate 212 can be fully utilized. The first mounting plate 211 is provided with a through hole adapted for the output end of the driving member 40 to extend through. The output end of the driving member 40 extends through the through hole and is connected to the pin suction assembly 10. The pin suction nozzle 12 of the pin suction assembly 10 extends through the second mounting plate 212 and is located on a side of the second mounting plate 212 that is distal to the first mounting plate 211, so that the pin suction nozzle 12 can draw a sealing pin via suction and insert the sealing pin into the liquid injection hole of the battery. The limiting member 30 is fixedly connected to a side of the second mounting plate 212 that is distal to the first mounting plate 211, so that it is possible to insert the sealing pin into the liquid injection hole to the predetermined depth only by the limiting member 30 abutting against the top of the battery.

In some implementations of the present disclosure, the pin inserting module further comprises: a stopping member 60, wherein the stopping member 60 is provided on the pin suction assembly 10, a position of the stopping member 60 in the first direction is adjustable, and the stopping member 60 is configured to cooperate with the first mounting plate 211 to limit a position of the pin suction assembly 10.

That is to say, as shown in Figure 1, the stopping member 60 is provided on a side of the pin suction seat 11 of the pin suction assembly 10 that is proximate to the first mounting plate 211. The number of the stopping member 60 may be one or two, etc. Through the cooperation of the stopping member 60 with the first mounting plate 211, it is possible to limit an upward movement distance of the pin suction assembly 10 in the first direction. When the stopping member 60 abuts against the first mounting plate 211, the pin suction assembly 10 is limited at a predetermined position, which can prevent the pin suction assembly 10 from moving upward excessively. During pin insertion, by driving the pin suction assembly 10 so that the stopping member 60 abuts against the first mounting plate 211, it is possible to ensure that the pin inserting module inserts the sealing pin to the predetermined depth, effectively avoiding the problem of excessive or insufficient insertion of the sealing pin.

Further, the position of the stopping member 60 in the first direction is adjustable, so that the stopping member 60 can be adjusted to a corresponding position according to the types of batteries and sealing pins, effectively improving the reliability and applicability of the pin inserting module.

It should be noted that, when adjusting the position of the stopping member 60, the position of the stopping member 60 may be adjusted according to the heights of the top of the sealing pin and the top of the battery after predetermined pin insertion, so that the distance between the head of the pin suction nozzle 12 (i.e., the end surface that contacts the sealing pin) and the head of the limiting member 30 (i.e., the end surface that contacts the battery) is equal to the height difference between the top of the sealing pin and the top of the battery, which will not be repeated in the present embodiment.

According to an embodiment of the present disclosure, the stopping member 60 is configured as a screw, and the screw is threadedly connected with the pin suction assembly 10.

In the present embodiment, the stopping member 60 is a screw. By rotating the stopping member 60, the position of the stopping member 60 in the first direction can be adjusted, with a simple structure and easy operation.

In conclusion, the pin inserting module provided according to the present embodiment, by providing the limiting member 30 and the pin suction assembly 10 on the elastically floatable floating seat 21, enables the pin inserting module to insert the sealing pin to the predetermined depth when inserting pins into batteries of different heights, thereby effectively avoiding the problem of excessive or insufficient insertion of the sealing pin caused by dimensional errors of the batteries, significantly improving the yield of pin insertion, and further enhancing the production efficiency and product quality.

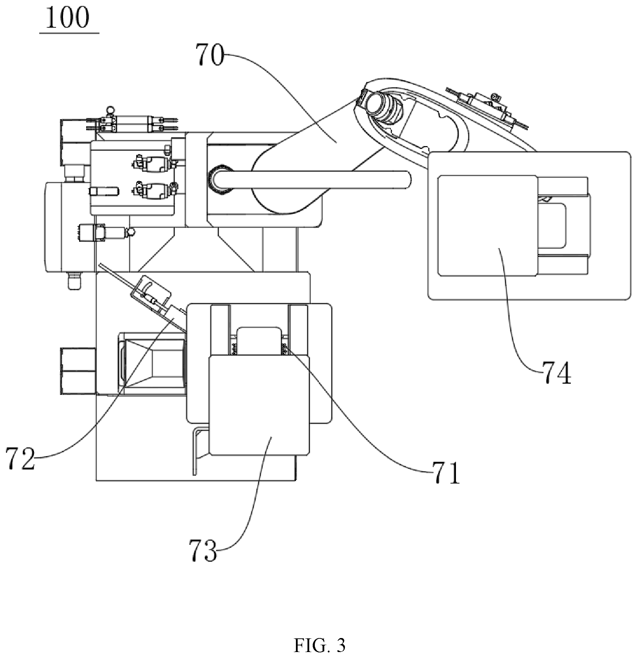

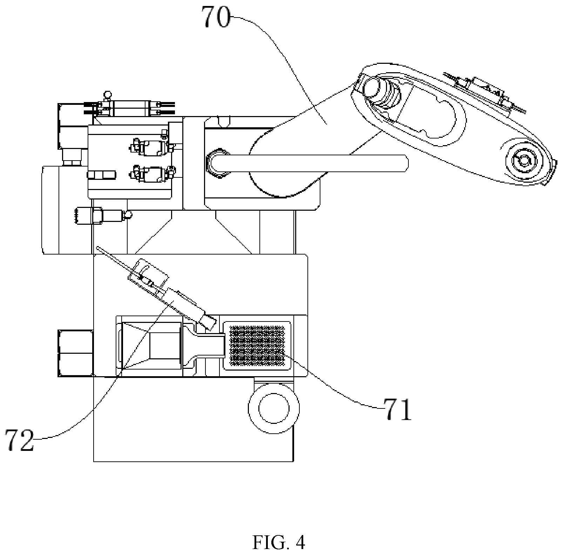

As shown in Figures 3 to 5, an embodiment of the present disclosure further provides a pin inserting device 100, comprising the pin inserting module described in any of the preceding embodiments. Since the pin inserting module according to the embodiments of the present disclosure has the above-mentioned technical effects, the pin inserting device 100 according to the embodiments of the present disclosure also has corresponding technical effects, which will not be repeated in the present embodiment.

As shown in Figures 3 to 5, according to an embodiment of the present disclosure, the pin inserting device 100 further comprises a multi-axis robot apparatus 70 (e.g., a four-axis robot apparatus), a flexible vibration plate apparatus 71, an ion air apparatus 72, a first CCD apparatus 73, and a second CCD apparatus 74. Wherein, the multi-axis robot apparatus 70 is provided with a pin inserting driving unit 75. An output end of the pin inserting driving unit 75 is fixedly connected to the base 20. The multi-axis robot apparatus 70 can drive the pin inserting module to move between a pin inserting station and a feeding station, and the pin inserting driving unit 75 can control the pin inserting module to move in the first direction, so that the pin suction assembly 10 can perform pin suction and pin inserting.

As shown in Figures 3 to 5, the pin suction nozzle 12 of the pin suction assembly 10 is connected to a negative pressure generating apparatus via an air joint 13 and an air valve assembly. A pressure gauge is connected to the air joint 13. The air valve assembly includes a vacuum valve. When the vacuum valve is opened, the pin suction nozzle 12 starts to draw a sealing pin via suction. By reading the value of the pressure gauge, it is possible to determine whether the pin suction nozzle 12 has successfully drawn a sealing pin via suction.

As shown in Figures 3 to 5, the flexible vibration plate apparatus 71 is disposed at the feeding station, and is used for containing sealing pins. Specifically, a plate body of the flexible vibration plate apparatus 71 is provided with holes adapted to accommodate sealing pins. The flexible vibration plate apparatus 71 can vibrate the sealing pins into the holes, so that a lower end of each sealing pin is inserted into the corresponding hole. The ion air apparatus 72 faces the plate body of the flexible vibration plate apparatus 71. The ion air apparatus 72 can blow an ion air flow to the flexible vibration plate apparatus 71, which can neutralize static electricity and reduce static adsorption, thereby ensuring that the sealing pins remain clean during the feeding process, avoiding the problems of dust adhesion or material sticking caused by static electricity. Moreover, by blowing the sealing pins, it is conducive to transferring the sealing pins into the holes of the plate body of the flexible vibration plate apparatus 71.

The first CCD apparatus 73 may be located above the flexible vibration plate apparatus 71. The first CCD apparatus 73 can acquire position information of the sealing pins on the flexible vibration plate apparatus 71, and can transmit the acquired position information to the multi-axis robot apparatus 70. The second CCD apparatus 74 may be located above the pin inserting station. The second CCD apparatus 74 can acquire position information of the liquid injection hole of the battery, and can transmit the acquired position information to the multi-axis robot apparatus 70.

When the pin inserting device 100 according to the embodiments of the present disclosure is in use, the multi-axis robot apparatus 70 can, based on the position information of the sealing pins provided by the first CCD apparatus 73, drive the pin inserting module to move to a corresponding position to perform a pin suction operation. After the pin suction is completed, the multi-axis robot apparatus 70 can, based on the position information of the liquid injection hole provided by the second CCD apparatus 74, drive the pin inserting module to move to a position directly above the liquid injection hole, and then control the output end of the pin inserting driving unit 75 to descend to a position corresponding to the lowest battery. If the battery is higher than the lowest battery, the limiting member 30 abuts against the top of the battery, and the pin suction assembly 10 moves upward relative to the output end of the pin inserting driving unit 75, thereby preventing insufficient or excessive insertion depth of the sealing pin.

An embodiment of the present disclosure further provides a pin inserting method, which uses the pin inserting device 100 according to any of the preceding embodiments to insert a pin into a battery. The pin inserting method comprises: S100 to S400.

S100: transporting the battery to a pin inserting station.

Specifically, when inserting a pin into the battery, the battery can be transported to a predetermined pin inserting station by using a transport apparatus.

S200: using the pin suction assembly 10 to draw a sealing pin via suction.

In detail, the multi-axis robot apparatus 70 can, based on the position information of the sealing pin provided by the first CCD apparatus 73, drive the pin inserting module to move to a corresponding position at the feeding station to draw the sealing pin via suction.

S300: moving the pin inserting module to the pin inserting station.

Specifically, after the pin suction is completed, the multi-axis robot apparatus 70 can, based on the position information of the liquid injection hole provided by the second CCD apparatus 74, drive the pin inserting module to move to a position directly above the liquid injection hole (i.e., the pin inserting station).

S400: driving the base 20 to move along the first direction based on the height of the lowest battery, so that the limiting member 30 abuts against the battery, and through the movement of the base 20, inserting the sealing pin into the liquid injection hole of the battery to a predetermined depth.

That is to say, in the pin inserting device 100, the output amount of the pin inserting driving unit 75 is set based on the height of the lowest battery, and is used as a reference to drive the base 20 to move along the first direction, so that the limiting member 30 can abut against both the top of a highest battery and the top of the lowest battery. During the pin inserting process, if the battery is higher than the lowest battery, the limiting member 30 abuts against the top of the battery, and the pin suction assembly 10 moves upward relative to the output end of the pin inserting driving unit 75; if a pin is being inserted into the lowest battery, when the sealing pin is inserted to the predetermined depth, the limiting member 30 exactly abuts against the top of the battery, or the limiting member 30 abuts against the top of the battery.

Thus, the pin inserting method provided according to the present embodiment, when inserting pins into batteries of different heights, enables the sealing pin to be inserted to the predetermined depth, effectively avoids the problem of excessive or insufficient insertion of the sealing pin caused by dimensional errors of the batteries, significantly improves the yield of pin insertion, and further enhances the production efficiency and product quality.

It should be noted that dimensional errors existing in the battery manufacturing process cause the height of the battery to fluctuate within a certain range. The lowest battery refers to the battery with the smallest height in a batch, and the highest battery refers to the battery with the largest height.

The above embodiments focus on the differences between the various embodiments, and the different optimization features between the various embodiments, as long as they do not contradict each other, may be combined to form a better embodiment, which will not be repeated herein taking into account the brevity of the text.

Although some specific embodiments of the present disclosure have been described in detail through examples, those skilled in the art should understand that the above examples are for illustration only and are not intended to limit the scope of the present disclosure. Those skilled in the art should understand that the above embodiments can be modified without departing from the scope and spirit of the present disclosure. The scope of the present disclosure is defined by the accompanying claims.

## Claims

1. A pin inserting module, **characterized by** comprising:
a pin suction assembly (10) configured to draw a sealing pin via suction;
a base (20) provided, on one side thereof, with a floating seat (21) that is elastically floatable along a first direction, the pin suction assembly (10) being provided on the floating seat (21), the base (20) being movable along the first direction so that the pin suction assembly (10) is capable of inserting the sealing pin into a liquid injection hole of a battery; and
a limiting member (30) provided on the floating seat (21) and configured to abut against the battery when the sealing pin is inserted into the liquid injection hole to a predetermined depth, so as to limit an insertion depth of the sealing pin.

2. The pin inserting module according to claim 1, **characterized by** further comprising:
at least one guide rod (22) fixedly connected to one of the base (20) and the floating seat (21), and movably provided along the first direction on the other of the base (20) and the floating seat (21); and
an elastic member (23) provided between the base (20) and the floating seat (21) and sleeved on the guide rod (22).

3. The pin inserting module according to claim 2, **characterized in that** a first end of the guide rod (22) extends through the other of the base (20) and the floating seat (21), and is threadedly connected with an adjusting nut (24), and the adjusting nut (24) is configured to adjust a compression amount of the elastic member (23).

4. The pin inserting module according to any one of claims 1 to 3, **characterized in that** the pin suction assembly (10) is fixedly connected to the floating seat (21).

5. The pin inserting module according to any one of claims 1 to 4, **characterized in that**, in the first direction, a position of the pin suction assembly (10) relative to the limiting member (30) is adjustable.

6. The pin inserting module according to claim 5, **characterized in that** the pin suction assembly (10) is movable along the first direction, and the pin inserting module further comprises:
a driving member (40) provided on the floating seat (21), connected to the pin suction assembly (10), and configured to drive the pin suction assembly (10) to move along the first direction.

7. The pin inserting module according to any one of claims 1 to 6, **characterized in that** the limiting member (30) is configured as a guide sleeve, is fixedly connected to the floating seat (21), and is sleeved on the pin suction assembly (10).

8. The pin inserting module according to claim 6, **characterized by** further comprising:
a floating joint (50) comprising a first connecting portion (51) and a second connecting portion (52) that are relatively movable along a second direction, the first connecting portion (51) being connected to the driving member (40), and the second connecting portion (52) being connected to the pin suction assembly (10).

9. The pin inserting module according to claim 6, **characterized in that** the floating seat (21) comprises:
a first mounting plate (211), wherein the driving member (40) is provided on a side of the first mounting plate (211) that is proximate to the base (20); and
a second mounting plate (212), wherein in the first direction, the second mounting plate (212) is located on a side of the first mounting plate (211) that is distal to the base (20); the first mounting plate (211) and the second mounting plate (212) are connected via a connecting member (213); and the limiting member (30) is provided on a side of the second mounting plate (212) that is distal to the first mounting plate (211);
a part of the pin suction assembly (10) is located between the first mounting plate (211) and the second mounting plate (212), and a pin suction nozzle (12) of the pin suction assembly (10) extends through the second mounting plate (212) and is located on a side of the second mounting plate (212) that is distal to the first mounting plate (211).

10. The pin inserting module according to claim 9, **characterized by** further comprising:
a stopping member (60) provided on the pin suction assembly (10), wherein a position of the stopping member (60) in the first direction is adjustable, and the stopping member (60) is configured to cooperate with the first mounting plate (211) to limit a position of the pin suction assembly (10).

11. The pin inserting module according to claim 10, **characterized in that** the stopping member (60) is configured as a screw, and the screw is threadedly connected with the pin suction assembly (10).

12. A pin inserting device, **characterized by** comprising the pin inserting module according to any one of claims 1 to 11.

13. A pin inserting method, **characterized by** using the pin inserting device according to claim 12 to insert a pin into a battery, the pin inserting method comprising:
transporting the battery to a pin inserting station;
using the pin suction assembly (10) to draw a sealing pin via suction;
moving the pin inserting module to the pin inserting station; and
driving, based on the height of the lowest battery, the base (20) to move along the first direction so that the limiting member (30) abuts against the battery, and through the movement of the base (20), inserting the sealing pin into a liquid injection hole of the battery to a predetermined depth.
